# EUROPEAN PATENT APPLICATION

(11) **EP 3 388 997 A1**
(43) Date of publication of application: **17.10.2018**
(21) Application number: 16872304.7
(22) Date of filing: 24.11.2016
(51) Int. Cl.: G06Q 30/02

(54) **METHOD FOR USING WASHING MACHINE FOR QUICK PRODUCT RECOMMENDATION AND WASHING MACHINE**

(30) Priority: 07.12.2015 CN 201510897373; 07.12.2015 CN 201510896846
(71) Applicant: Qingdao Haier Drum Washing Machine Co., Ltd., Shandong 266101 (CN)
(72) Inventor: SHU, Hai, Qingdao Shandong 266101 (CN); XU, Sheng, Qingdao Shandong 266101 (CN); ZHANG, Tao, Qingdao Shandong 266101 (CN); HUANG, Zhenxing, Qingdao Shandong 266101 (CN)
(74) Representative: Ziebig & Hengelhaupt Patentanwälte PartG mbB
(86) International application number: PCT/CN2016/107068
(87) International publication number: WO 2017/097112

(57) **Abstract**

The disclosure discloses a method for quickly recommending commodities by using a washing machine and the washing machine. The method comprises: S1: enabling the washing machine to receive a trigger signal (101); S2: sending a commodity recommendation command to a server, the commodity recommendation command at least comprising an identifier of the trigger signal (102); S3: enabling the server to search for a keyword corresponding to the commodity recommendation command, automatically recommend commodities relevant to the keyword by using big data and send recommended commodities to an intelligent terminal bound to the washing machine after the server receives the commodity recommendation command (103); and S4, enabling the intelligent terminal to display the recommended commodities on a display interface, the displayed information at least comprising commodity identifiers and URL addresses corresponding to the commodity identifiers (104). When the washing machine receives the trigger signal, most appropriate commodities are recommended by the server using the big data; in this way, the online shopping time of a user is saved, the shopping efficiency of the user is improved and the operation of the user is simplified; and thus the quick purchase of the commodities is implemented.

## Description

### TECHNICAL FIELD

The disclosure relates to the field of washing machines, and particularly relates to a method for quickly recommending commodities by using a washing machine and the washing machine.

### BACKGROUND

Along with the upgrading of washing machines, functions of the washing machines are also increasing, including automatically adding a detergent and a softener, and even sending out a prompt when the detergent and the softener are to be used up to remind a user of purchasing corresponding laundry products in time.

However, at present, when people purchase the laundry products, it is frequent and necessary for them to keep it in mind. They will go to a supermarket to purchase the laundry products or search for the corresponding laundry products in a shopping mall on a mobile phone or a computer, choose a commodity, place an order and pay for the commodity to finish the purchase. Nonetheless, such a condition that often takes place in life that when a user washes clothes and finds the laundry products is used up, he/she remembers to purchase at that time and will forget it soon after one thing is finished. When the laundry products needs to be used again, it has been used up and thus he/she cannot make a purchase timely and quickly. In addition, there are many diversified types of the laundry products, and it takes a lot of time to select an appropriate one, sometimes, professional washing knowledge is required. For a common user, the online shopping efficiency is extremely low; and particularly for a fast-paced urban white-collar worker, it is extremely inconvenient. Therefore, a washing machine is urgently needed that recommends the most suitable laundry products for the user when the laundry products is found to be used up during washing.

In view of this, the disclosure is provided.

### SUMMARY

The technical problem to be solved by the disclosure is to overcome the shortcomings of the prior art and provides a method for quickly recommending commodities by using a washing machine. By sending a trigger signal to the washing machine, and recommending most appropriate commodities by a server using big data, the online shopping time of a user is saved, the shopping efficiency of the user is improved, the operation of the user is simplified and thus the quick purchase of the commodities is implemented.

Another object of the disclosure is to provide a washing machine adopting the method.

The technical solutions of the disclosure to the technical problems are as follows.

The disclosure provides a method for quickly recommending commodities by using a washing machine, which includes:
S11: enabling the washing machine to receive a trigger signal;
S12: sending a commodity recommendation command to a server, the commodity recommendation command at least including an identifier of the trigger signal;
S13: enabling the server to search for a keyword corresponding to the commodity recommendation command, automatically recommend commodities relevant to the keyword by using big data and send recommended commodities to an intelligent terminal bound to the washing machine after the server receives the commodity recommendation command; and
S14, enabling the intelligent terminal to display the recommended commodities on a display interface, the displayed information at least including commodity identifiers and Uniform Resource Locator (URL) addresses corresponding to the commodity identifiers.

Further, the step of enabling the server to automatically recommend the commodities relevant to the keyword by using big data includes:
A11: enabling the server to search for all commodities relevant to the keyword in at least one online shopping mall according to the keyword;
A12: enabling the server to actively obtain additional information, the additional information including at least one of a group consisted of a historical purchase record of a user, a commodity browse record of the user, position information of the washing machine, a current season and current weather; and
A13: enabling the server to recommend commodities relevant to the additional information from the searched commodities by using the big data.

Further, before the step S14, the method further includes:
popping out a piece of prompt information on the display interface of the intelligent terminal, the prompt information being used for prompting on whether to display the recommended commodities on the display interface of the terminal or not, and if yes, executing the step S14.

Further, in the step S14, the intelligent terminal further displays an option of at least one sorting criterion on the display interface, for sorting the recommended commodities according to the sorting criterion; and
the sorting criterion includes at least one of a group consisted of sorting according to prices, sorting according to comments, sorting according to popularities, and sorting according to access amounts to the online shopping mall.

Further, the commodity recommendation command further includes identity identification information; and the identity identification information includes a washing machine code and/or a user ID.

Further, before the step S11, the method further includes: setting a corresponding relationship between the commodity recommendation command and the keyword; and the setting method includes:
B11: binding the washing machine with the intelligent terminal;
B12: enabling the intelligent terminal to obtain the identity identification information and the identifier of the trigger signal, and store the identity identification information and the identifier of the trigger signal into the commodity recommendation command; and
B13: enabling the intelligent terminal to set the keyword corresponding to the commodity recommendation command, and store the corresponding relationship therebetween to the server.

Further, a recommendation apparatus is arranged on the washing machine; and when the recommendation apparatus is triggered, the trigger signal is sent to the washing machine.

Further, the recommendation apparatus is a touch panel, and when the touch panel is touched according to a preset track, the trigger signal corresponding to the preset track is sent to the washing machine and the step S11 is executed; or
the recommendation apparatus is a physical key, and when the physical key is pressed according to a preset key-press manner, the trigger signal corresponding to the preset key-press manner is sent to the washing machine and the step S11 is executed; or
the recommendation device is a combined key composed of at least two keys existed on the washing machine, and when the combined key is pressed, the trigger signal corresponding to the combined key is sent to the washing machine and the step S11 is executed.

The disclosure further provides a washing machine adopting the method; a recommendation apparatus is arranged on the washing machine and is used for triggering the washing machine to send a commodity recommendation command to a server; the server sends recommended commodities to an intelligent terminal bound to the washing machine according to the commodity recommendation command; and the intelligent terminal displays the recommended commodities on a display interface.

Further, the recommendation apparatus is a touch panel arranged on the washing machine, and a manner for triggering the touch panel includes: touching the touch panel according to a preset track; or
the recommendation apparatus is a physical key arranged on the washing machine, and a manner for triggering the physical key at least includes any one of a group consisted of pressing once, continuously pressing twice, continuously pressing for three times, long pressing once, shortly pressing once and then long pressing once, and shortly pressing twice and then long pressing once; or
the recommendation apparatus is a combined key composed of at least two keys existed on the washing machine, and a manner for triggering the combined key includes: pressing all the keys composing the combined key simultaneously.

The disclosure further provides a method for quickly recommending commodities by using a washing machine, which includes:
S21: identifying a commodity by using a commodity identification apparatus on the washing machine and obtaining commodity information;
S22: sending a commodity recommendation command containing the commodity information to a server;
S23: enabling the server to automatically recommend commodities relevant to the commodity information by using big data and send recommended commodities to an intelligent terminal bound to the washing machine after the server receives the commodity recommendation command; and
S24: enabling the intelligent terminal to display the recommended commodities on a display interface, the displayed information at least including commodity identifiers and URL addresses corresponding to the commodity identifiers.

Further, the step of enabling the server to automatically recommend commodities relevant to the commodity information by using big data includes:
A21: enabling the server to search for all commodities relevant to the commodity information in at least one online shopping mall according to the commodity information;
A22: enabling the server to actively obtain additional information, the additional information including at least one of a group consisted of a historical purchase record of a user, a commodity browse record of the user, position information of the washing machine, a current season and current weather; and
A23: enabling the server to recommend commodities relevant to the additional information from the searched commodities by using the big data.

Further, before the step S24, the method further includes:
popping out a piece of prompt information on the display interface of the intelligent terminal, the prompt information being used for prompting on whether to display the recommended commodities on the display interface of the terminal or not and if yes, executing the step S24.

Further, in the step S24, the intelligent terminal further displays an option of at least one sorting criterion on the display interface, for sorting the recommended commodities according to the sorting criterion; and
the sorting criterion includes at least one of a group consisted of sorting according to prices, sorting according to comments, sorting according to popularities, and sorting according to access amounts to the online shopping mall.

Further, ordering options corresponding to the commodity identifiers are further arranged on the display interface of the intelligent terminal and are used for triggering the server to automatically generate a commodity order for commodities corresponding to the commodity identifiers.

Further, after the step S24, the method further includes: sending ordering commands to the server when detecting that a user clicks the ordering options, and enabling the server to automatically generate the commodity order.

Further, the step of enabling the server to automatically generate the commodity order includes:
B21: obtaining commodity attributes according to the URL addresses corresponding to the commodity identifiers; and
B22: searching for preset consignee information and payment manner, and automatically generating the commodity order.

Further, after detecting that the user clicks the ordering options, the method further includes: popping out a prompt on whether to confirm ordering or not on the display interface of the intelligent terminal, and if yes, sending the ordering commands to the server and enabling the server to automatically generate the commodity order.

Further, the commodity identification apparatus is a scanner, and in the step S21, the scanner on the washing machine is used to scan a two-dimensional code or a barcode on the commodity and to obtain the commodity information; and
preferably, the commodity identification apparatus is an RFID reader/writer, and in the step S21, the RFID reader/writer is used to read an RFID chip on the commodity and to obtain the commodity information.

The disclosure further provides a washing machine adopting the method; the washing machine is provided with
a commodity identification apparatus, used for identifying a commodity, obtaining commodity information and sending the commodity information to a control module;
the control module, used for receiving the commodity information and storing the commodity information to a commodity recommendation command for gathering, and sending the commodity recommendation command to a server via a communication module, wherein the server automatically recommends commodities relevant to the commodity information by using big data, sends recommended commodities to an intelligent terminal bound to the washing machine and displays the recommended commodities on a display interface of the terminal; and
the communication module, used for connecting the control module with the server, thereby implementing data interaction.

Through the technical solutions provided by the specific implementations of the disclosure, the following beneficial effects are achieved.

According to the disclosure, by sending the trigger signal to the washing machine, and recommending most appropriate commodities by the server using the big data, the online shopping time of a user is saved, the shopping efficiency of the user is improved and the operation of the user is simplified and thus the quick purchase of the commodities is implemented.

### BRIEF DESCRIPTION OF THE DRAWINGS

In order to describe the technical solutions in the specific implementations of the disclosure more clearly, a simple introduction on the accompanying drawings which are needed in the description of the specific implementation manners is given below. Apparently, the accompanying drawings in the description below are merely some of the embodiments of the disclosure, based on which other drawings can be obtained by those of ordinary skill in the art without any creative effort.
Fig. 1 is a flow diagram of a method for quickly recommending commodities by using a washing machine provided by the disclosure;
Fig. 2 is a flow diagram of another method for quickly recommending commodities by using a washing machine provided by the disclosure;
Fig. 3 is a flow diagram of another method for quickly recommending commodities by using a washing machine provided by the disclosure;
Fig. 4 is a flow diagram of a setting method provided by the disclosure;
Fig. 5 is a structural schematic diagram of a washing machine provided by the disclosure;
Fig. 6 is a structural schematic diagram of a control panel of a washing machine provided by the disclosure;
Fig. 7 is a structural schematic diagram of another control panel of a washing machine provided by the disclosure;
Fig. 8 is a schematic diagram of a display interface of an intelligent terminal provided by the disclosure;
Fig. 9 is a flow diagram of another method for quickly recommending commodities by using a washing machine provided by the disclosure;
Fig. 10 is a flow diagram of another method for quickly recommending commodities by using a washing machine provided by the disclosure;

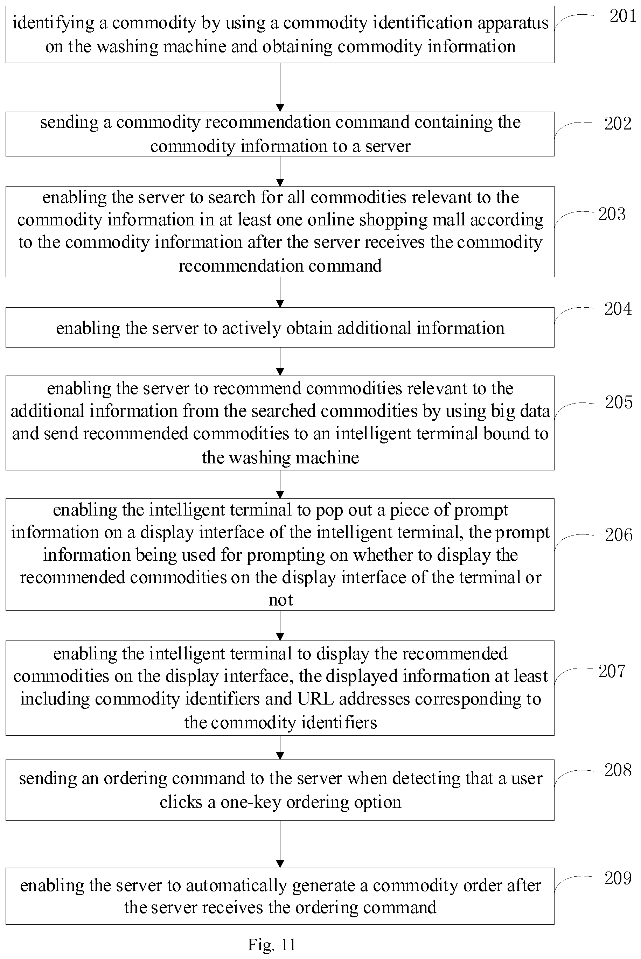

Fig. 11 is a flow diagram of another method for quickly recommending commodities by using a washing machine provided by the disclosure; and
Fig. 12 is a structural schematic diagram of another washing machine provided by the disclosure.

### DETAILED DESCRIPTION

In the disclosure, the washing machine is an intemet-of-things washing machine. The washing machine is in communication connection with a server. The server is in communication connection with an intelligent terminal. The communication technology can be any one of a group consisted of WIFI, GPRS, ZigBee and RS-485 technology. The washing machine exchanges data with the server after an intemet-of-things function is enabled. The intelligent terminal is an intelligent mobile phone/a PAD/a PC. Wherein, the server is used for providing a washing machine management platform service, including registration and management of a user account, and binding and management of the washing machine and the user account. The server further sends a control command to the washing machine and receives information reported by the washing machine, and further synchronizes a running status of the washing machine to the intelligent terminal. After an APP capable of controlling the washing machine is installed on the intelligent terminal, an account can be registered on an APP client and is bound to the washing machine.

The implementations will be further described below with reference to the accompanying drawings and embodiments.

### Embodiment I

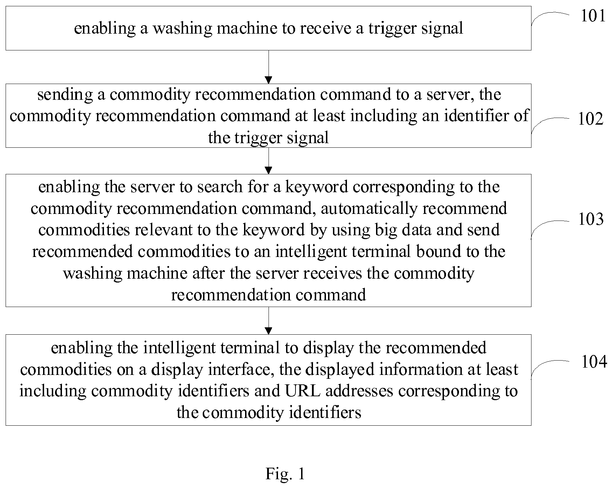

The embodiment provides a method for quickly recommending commodities by using a washing machine. As shown in Fig. 1, the method includes the following steps.

Step 101: the washing machine receives a trigger signal.

Step 102: a commodity recommendation command is sent to a server, the commodity recommendation command at least including an identifier of the trigger signal.

Step 103: the server searches for a keyword corresponding to the commodity recommendation command, automatically recommends commodities relevant to the keyword by using big data and sends recommended commodities to an intelligent terminal bound to the washing machine after the server receives the commodity recommendation command.

Step 104: the intelligent terminal displays the recommended commodities on a display interface, the displayed information at least including commodity identifiers and URL addresses corresponding to the commodity identifiers.

In this embodiment, by sending the trigger signal to the washing machine, recommending most appropriate commodities by the server using the big data and displaying the most appropriate commodities on the intelligent terminal bound to the washing machine, the user can obtain the most appropriate recommended commodities only with a one-step action. In this way, the shopping time of the user is saved, the shopping efficiency of the user is improved and the shopping operation of the user is simplified.

### Embodiment II

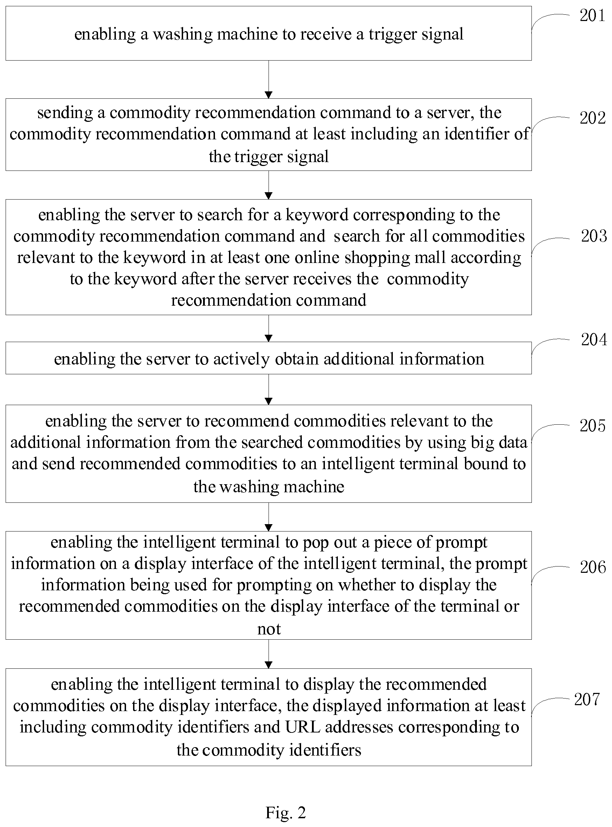

The embodiment provides a method for quickly recommending commodities by using a washing machine. As shown in Fig. 2, the method includes the following steps.

Step 201: the washing machine receives a trigger signal.

Wherein, a recommendation apparatus is arranged on the washing machine, and when the recommendation apparatus is triggered, the trigger signal is sent to a control module of the washing machine.

Preferably, the recommendation apparatus is a touch panel arranged on the washing machine, and when the touch panel is touched by the user according to a preset track, the trigger signal corresponding to the preset track is sent to the control module of the washing machine.

Wherein, the touch panel is obtained by plating a surface of transparent glass with a layer of tin antimony oxide thin film, namely a protective film, and electronic signal anti-interference treatment is carried out between the touch panel and a liquid crystal screen. The touch panel is a direct manifestation of a touch technology and is used for inducing a touch signal, and analyzing and identifying the touch signal. Therefore, when the touch panel is touched by the user according to a certain track, the touch panel can induce a touch track of the user correspondingly.

Wherein, the preset track can be in any pattern. The preset track of each pattern is referred to as a triggering manner. Preset tracks of different patterns correspond to different triggering manners and each triggering manner corresponds to one trigger signal. Preferably, the preset track is preset in the washing machine by a developer. For example, the track preset in the washing machine is a letter pattern C, so when the touch panel is touched by the user according to the letter pattern C, a trigger signal corresponding to the letter pattern C is sent to the control module of the washing machine. Further preferably, the preset track is set by the user freely and is stored in the washing machine.

Further preferably, the recommendation apparatus is a physical key arranged on the washing machine, and when the physical key is pressed according to a preset key-press manner, a trigger signal corresponding to the preset key-press manner is sent to the washing machine.

Wherein, the key-press manner of the physical key is preset in the washing machine by the developer. Each key-press manner is referred to as a triggering manner and each triggering manner corresponds to one trigger signal. Preferably, the key-press manner at least includes any one of a group consisted of pressing once, continuously pressing twice, continuously pressing for three times, long pressing once, shortly pressing once and then long pressing once, and shortly pressing twice and then long pressing once.

For example, the preset triggering manner includes pressing once and continuously pressing for three times, which respectively correspond to a first trigger signal and a second trigger signal. When the physical key is continuously pressed for three times by the user, the physical key sends the second trigger signal to the control module of the washing machine and the control module of the washing machine receives the second trigger signal.

Preferably, the physical key is newly added key except a power key, a start/pause key, a washing program key and washing parameter keys, wherein the washing parameter keys are used for controlling various parameters in the washing program, such as rinsing, dewatering, a water level, a time, a temperature, drying and a rotational speed.

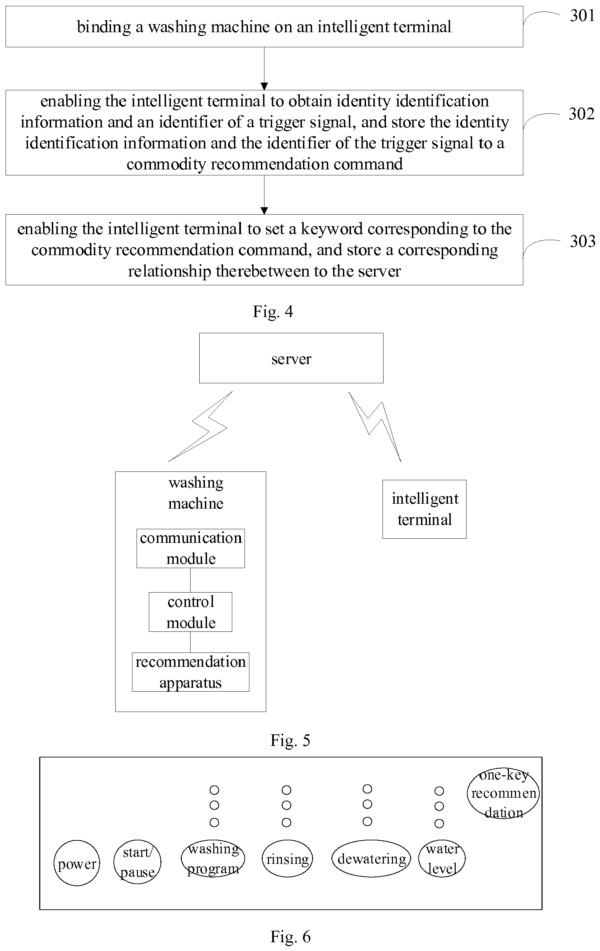

For example, as shown in Fig. 6, a power key, a start/pause key, a washing program key, a rinsing key, a dewatering key, a water level key and a one-key recommendation key are arranged on the washing machine. The one-key recommendation key is the recommendation apparatus and is used for triggering the washing machine to send the commodity recommendation command to the server. The server recommends commodities most appropriate to the user according to the commodity recommendation command and displays recommended commodities on the intelligent terminal bound to the washing machine.

Preferably, the physical key is any one of a group consisted of the washing parameter keys. After a washing program is selected and if the physical key is triggered, a function of a corresponding washing parameter is executed. When the washing program is not selected and if the physical key is triggered, a function of triggering the washing machine to send the commodity recommendation command to the server is executed.

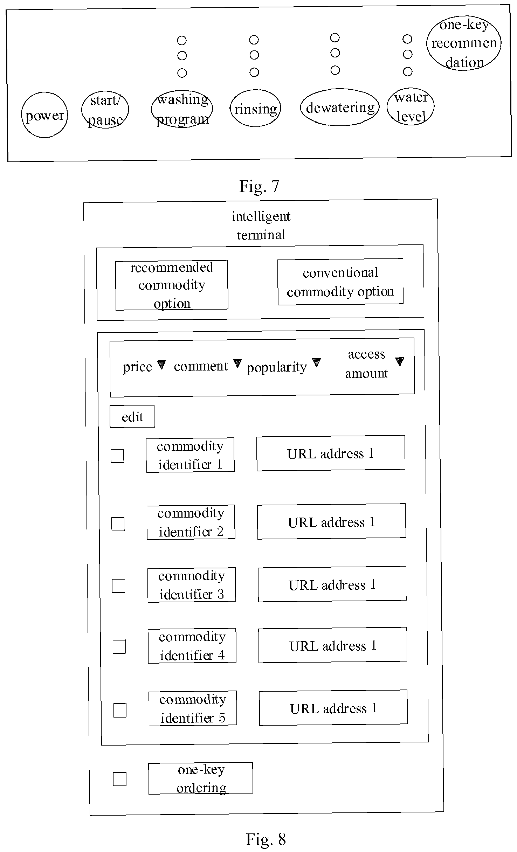

For example, as shown in Fig. 7, a power key, a start/pause key, a washing program key, a rinsing key, a dewatering key and a water level key are arranged on the washing machine. The water level key further can be used as the recommendation apparatus for triggering the washing machine to send the commodity recommendation command to the server. After startup of the washing machine, when the washing program is not selected and if the water level key is pressed, the water level key executes a function of recommending commodities at this moment. That is, a trigger signal corresponding to the water level key is sent to the washing machine and the washing machine is triggered to send the commodity recommendation command to the server. After the washing program is selected and if the water level key is pressed, the water level key executes a function of setting a water level of the washing machine.

Preferably, the recommendation apparatus is a combined key composed of any at least two keys on the washing machine, and when the combined key is pressed, a trigger signal corresponding to the combined key is sent to the washing machine.

A manner for triggering the combined key includes: pressing all keys composing the combined key simultaneously.

For example, regarding the washing machine as shown in Fig. 7, the recommendation apparatus is a combined key composed of a rinsing key, a dewatering key and a water level key. When the rinsing key, the dewatering key and the water level key are pressed simultaneously, a trigger signal corresponding to the combined key is sent to the washing machine.

Regardless of whether the recommendation apparatus is the physical key, the touch panel or the combined key and whichever the triggering manner is, the trigger apparatus can send the trigger signal to the washing machine with only one-step operation of the user. Therefore, the operation of the user is very convenient and no time is consumed.

Step 202: a commodity recommendation command is sent to the server, the commodity recommendation command at least including an identifier of the trigger signal.

Specifically, when receiving the trigger signal, the washing machine obtains the identifier of the trigger signal correspondingly, stores the identifier to the commodity recommendation command and sends the commodity recommendation command to the server.

Wherein, a corresponding relationship between the trigger signal and the identifier of the trigger signal is pre-stored in the washing machine. After reception of the identifier of the trigger signal, the washing machine can obtain the identifier of the trigger signal correspondingly.

Preferably, the commodity recommendation command further includes identity identification information. The identity identification information is used for distinguishing each of commodity recommendation commands sent by different washing machines or different users so as to determine the uniqueness of each of the commodity recommendation commands.

Wherein, the identity identification information can be a washing machine code, and also can be a user ID. Specifically, each washing machine has a unique code when leaving a factory, for identifying different washing machine devices. The code is preset in the control module of the washing machine. After the washing machine receives the trigger signal, the code is obtained from the control module of the washing machine. The user ID is an account number through which the user logs in the server. The account number in the server is unique and is used for identifying different users. The account number of the user is preset in the control module of the washing machine. After the washing machine receives the trigger signal, the account number is obtained from the control module of the washing machine.

Step 203: after reception of the commodity recommendation command, the server searches for a keyword corresponding to the commodity recommendation command and searches for all commodities relevant to the keyword in at least one online shopping mall according to the keyword.

Preferably, the keyword is associated with laundry products. Further preferably, the keyword is a category name of the laundry products, such as a laundry detergent, a softener, a bleaching agent, washing powder, a washing soap and a flocculant. The online shopping mall for example is Ehaier, Taobao, Tmall, and JDcom and so on.

For example, the keyword is a detergent and the server searches for various brands and types of detergents in Ehaier.

Step 204: the server actively obtains additional information.

Wherein, the additional information includes at least one of a group consisted of a historical purchase record of a user, a commodity browse record of the user, position information of the washing machine, a current season and current weather.

Specifically, the historical purchase/browse record of the user is obtained by the following manner: after an APP capable of controlling the washing machine is installed on the intelligent terminal, an account is registered on an APP client and is bound to the washing machine. When a commodity purchase/browse behavior is generated by the user account, the corresponding purchase/browse record is stored to the server, and the server directly obtains the historical purchase/browse record of the user account.

For example, after the APP capable of controlling the washing machine is installed on the intelligent terminal, the corresponding purchase/browse record is stored to the server when the user purchases/browses the commodities on the online shopping mall of the APP.

Preferably, the intelligent terminal further accesses the purchase/browse record of the user on other APPs in the intelligent terminal, and synchronizes the purchase/browse record to a server side.

For example, an APP capable of controlling the washing machine is installed on the intelligent terminal. The APP capable of controlling the washing machine can get authorities to access other APPs, and obtains the purchase/browse record and synchronizes the purchase/browse record to the server side when the user purchases/browses commodities on the other APPs.

The position information of the washing machine can be obtained by the following manner: the server obtains a current position of the washing machine according to a WIFI network of the washing machine, or the server obtains the current position of the washing machine according to a GPRS on the washing machine.

The current season and weather can be obtained by the following manner: the server obtains a season and a weather corresponding to a geographical position directly from a network according to the current position of the washing machine.

Step 205: the server recommends commodities relevant to the additional information from the searched commodities by using big data, and sends recommended commodities to an intelligent terminal bound to the washing machine.

Specifically, the server recommends commodities most approximate to the historical purchase/browse record of the user from the searched commodities. The server further obtains the local water hardness from a network according to the position information of the washing machine and recommends commodities best matched with the local water hardness from the searched commodities (e.g. a detergent, a softener and the like matched with the water hardness). The server further recommends commodities most appropriate to be used in current season and weather from the searched commodities (e.g. a laundry detergent without hurt to a hand in winter).

Further, the server generates a URL address for each of the recommended commodities and sends the URL addresses to the intelligent terminal. Preferably, the server generates the URL address for all commodities relevant to the keyword and the commodities relevant to the additional information respectively, and sends the URL addresses to the intelligent terminal.

Step 206: the intelligent terminal pops out a piece of prompt information on a display interface, the prompt information being used for prompting on whether to display the recommended commodities on the display interface of the terminal or not.

If yes, the step 207 is executed. If no, the intelligent terminal pops out a prompt on whether to delay or not, redisplays the prompt information after a preset time if yes and cancels the prompt information and ignores the recommended commodities sent by the server at this time if no.

For example, the prompt information popped out by the intelligent terminal on the display interface is "A piece of detergent recommendation information from the washing machine is received, whether to open", and "Open" and "Cancel" options are given on the display interface. When the user selects the "Open" option, the intelligent terminal executes the step 207. When the user selects the "Cancel" option, the intelligent terminal pops out a prompt "Redisplay after 1h, OK?" on whether to delay or not and provides two operation options, namely "Delay for 1h" and "Don't display again". If the user chooses the "Delay for 1h", the intelligent terminal redisplays the prompt information "A piece of detergent recommendation information from the washing machine is received, whether to open" after 1h. If the user chooses the "Don't display again", the terminal ignores the recommended commodities sent by the server at this time.

Step 207: the intelligent terminal displays the recommended commodities on the display interface, the displayed information at least including commodity identifiers and URL addresses corresponding to the commodity identifiers.

Wherein, the commodity identifiers can be commodity names. The URL addresses are used for pointing to unique destination addresses of the commodities in the online shopping mall. After one destination address is determined, a part of commodity attributes are determined correspondingly, such as a shopping mall name, a store name, a commodity category, a name, a brand, a specification, a model, a style and a price. By clicking the URL addresses, the user can enter commodity shopping pages to purchase the commodities. Preferably, the displayed information further includes commodity pictures corresponding to the commodity identifiers.

Preferably, the intelligent terminal further displays all commodities relevant to the keyword. Specifically, a recommended commodity option and a conventional commodity option (as shown in Fig. 8) can be arranged on the display page of the intelligent terminal, in which the conventional commodity option is used for displaying all commodities relevant to the keyword and the recommended commodity option is used for displaying the commodities recommended by the server and relevant to the additional information. By clicking the options, the user can switch the commodity information displayed on the display page.

Preferably, the intelligent terminal further displays an option of at least one sorting criterion on the display interface (as shown in Fig. 8), for sorting the recommended commodities according to the sorting criterion, wherein the sorting criterion includes at least one of a group consisted of sorting according to prices, sorting according to comments, sorting according to popularities, and sorting according to access amounts to the online shopping mall. The sorting according to the access amounts to the online shopping mall refers to click rates to a homepage of the shopping mall.

In this embodiment, when the washing machine receives the trigger signal, the commodities appropriate to the user are recommended by the server using the big data and are displayed on the intelligent terminal bound to the washing machine, so that the user can obtain the most appropriate recommended commodities only with a one-step operation. In this way, the online shopping time of the user is saved, the shopping efficiency of the user is improved and the operation of the user is simplified.

### Embodiment III

In the embodiment, on the basis of the embodiment II, the user can purchase the commodities displayed on the display interface of the terminal in a conventional purchase manner, and also can perform one-key ordering on the commodities.

Wherein, the conventional purchase manner refers to that the user can directly click the URL address of the commodity to enter the commodity purchase page and select commodity attributes (such as a style and a quantity), then clicks an immediate purchase option to enter a setting page to set consignee information and confirm the ordering, and then enters a payment page to select a payment manner and input a payment password so that the server generates a commodity order.

The one-key ordering on the commodities refers to that there is provided a one-key ordering option (as shown in Fig. 8) on the display page of the recommended commodities and the user can choose at least one commodity by ticking options in front of the commodity identifiers and then clicks the one-key ordering so that the commodity order can be generated directly for all ticked commodities; or
after the user clicks the URL address to enter the commodity purchase page, there is provided with the one-key ordering option on the commodity purchase page. If the attributes need to be set, the user can set the attributes (such as the style and the quantity) on the commodity purchase page first and then clicks the one-key ordering so that the commodity order can be directly generated for the commodities in the URL address.

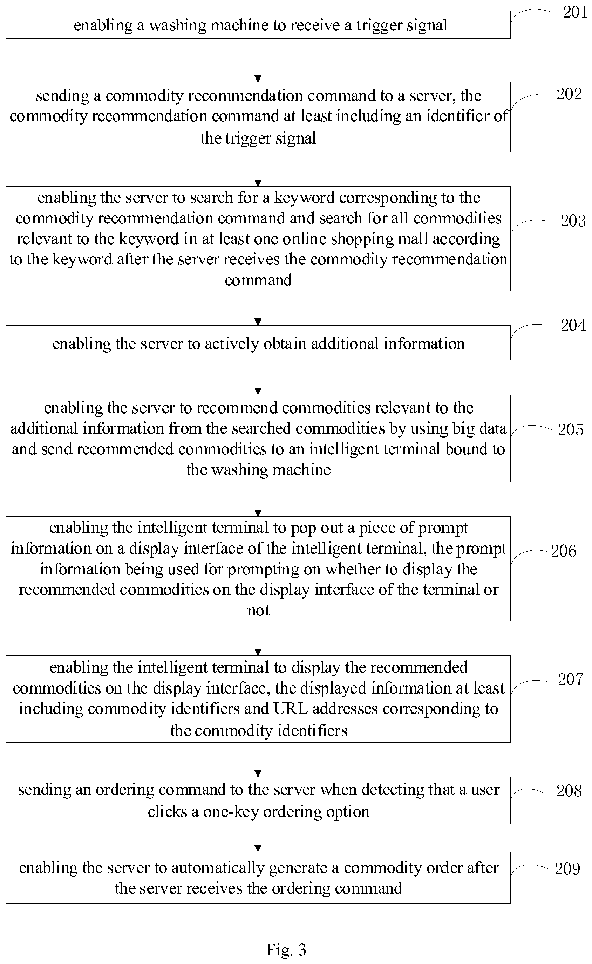

Specifically, after the step 207, as shown in Fig. 3, a one-key ordering method for the commodities includes the following steps.

Step 208: when detecting that the user clicks the one-key ordering option, an ordering command is sent to a server.

Preferably, when detecting that the user clicks the one-key ordering option, the display interface of the intelligent terminal pops out a prompt on whether to confirm the ordering or not and provides "CONFIRM" or "Cancel" operation options. When the user chooses the "CONFIRM", the intelligent terminal sends the ordering command to the server. By selecting the "Cancel", the user can directly cancel the ordering at this time.

Step 209: after reception of the ordering command, the server automatically generates a commodity order.

After the reception of the ordering command, the server executes the following steps specifically.

Step (1): the server obtains commodity attributes according to the URL addresses corresponding to the commodity identifiers.

Wherein, the URL addresses are used for pointing to a unique destination address of each of the commodities in the online shopping mall. After one destination address is determined, a part of the commodity attributes are determined correspondingly, such as a shopping mall name, a store name, a commodity category, a name, a brand, a specification, a model, a style and a price.

Wherein, the shopping mall name is Ehaier, Tmall and the like. The store name is an XX flagship store. The commodity category are laundry products. The name is washing powder, a detergent and a softener, etc. The brand is Tide and Liby, etc. The specification is n kg, n ml and the like. The model/style is a completely-efficient fragrant type, a lavender gentle scent type and the like.

Step (2): the server searches for preset consignee information and payment manner, and automatically generates the commodity order.

Wherein, the consignee information and the payment manner are preset in the server. Specifically, the consignee information and the payment manner are added to the server by the developer when the user purchases the washing machine and corresponding information are filled out. Preferably, the user can fill out the corresponding information actively and store the information to the server on a webpage of a corresponding APP client or PC client.

The server obtains a login status of the user account after obtaining the commodity attributes. If the user does not log in, a prompt is given to the user to log in. If the user logs in, default consignee information and payment manner of the log-in user are searched, the commodities are automatically paid according to the preset payment manner and the commodity order is generated according to the consignee information. The server sends the commodity order to a merchant and prompts the merchant of a new commodity order. The merchant can select corresponding commodities according to the commodity attributes of the commodities in the commodity order, fills out a logistic express bill according to the consignee information and sends the commodities to an address of a consignee via an express company or a logistics company.

Further, the consignee information at least includes a consignee name, a consignee telephone number and a delivery address. Preferably, the consignee information further includes a postal code of the delivery address. The payment manner includes online payment or cash on delivery. Regarding the online payment, a selectable payment system (such as credit card payment, debit card payment, alipay payment or wechat payment), a priority payment sequence of the payment system (for example, the alipay payment is used first and if the alipay payment fails, the wechat payment is used), and a payment limit (for example, the one-off payment below RMB 200 Yuan can be made automatically and the monthly payment should not exceed RMB 500 Yuan, etc.) further can be preset.

Preferably, after binding the washing machine on the intelligent terminal, the user can enter the APP, logs in the account number of the user and sets the consignee information and the payment manner.

In this embodiment, after the washing machine receives the trigger signal, the server recommends the commodities appropriate to the user by using the big data and displays the commodities on the intelligent terminal bound to the washing machine. The user can perform one-key ordering on some commodity on the intelligent terminal and also can perform quick ordering on mass commodities on the intelligent terminal. The user can obtain the most appropriate recommended commodities only with one-step operation and then can perform the one-key ordering on the recommended commodities to implement the quick purchase of the commodities. Therefore, the online shopping time of the user is saved, the shopping efficiency of the user is improved and the operation of the user is simplified.

### Embodiment IV

In this embodiment, a washing machine is in communication connection with a server. The server is in communication connection with an intelligent terminal. An APP capable of controlling the washing machine is installed on the intelligent terminal. A user can register an account on the intelligent terminal and bind the account to the washing machine.

Wherein, a recommendation apparatus is arranged on the washing machine. The recommendation apparatus includes at least one triggering manner to be triggered. Each triggering manner corresponds to one trigger signal, and different trigger signals correspond to different keywords. The keyword is preset in the washing machine by the developer and thus there is no need for the user to set the keyword. The keyword also can be actively set by the user. After binding the washing machine on the intelligent terminal, the user sets different keywords on the intelligent terminal according to different trigger signals on the washing machine. Preferably, the keyword is a commodity name relevant to the washing machine. Further preferably, the keyword is laundry products. Since the laundry products for a home is generally placed near the washing machine, when the laundry products is found to be used up soon, it can be quickly purchased via the recommendation apparatus on the washing machine.

For the user setting the keyword actively, as shown in Fig. 4, the setting method includes the following steps.

Step 301: a washing machine is bound on an intelligent terminal.

Specifically, after the washing machine is started, the intelligent terminal is entered to enable a function of searching for the washing machine. When the washing machine is detected, the intelligent terminal is automatically connected and bound with the washing machine. Wherein, the connection between the intelligent terminal and the washing machine is established via a WIFI technology and a Bluetooth technology, etc.

If the intelligent terminal and the washing machine is not connected, the user further actively inputs a model of the washing machine on a page of the intelligent terminal to bind the washing machine on the intelligent terminal.

For example, regarding a washing machine with an XX brand and an A-309S model, the user enables the function of searching for the washing machine on the intelligent terminal. When the washing machine with "the XX brand and the A-309S model" is detected, the intelligent terminal is automatically connected and bound with the washing machine via WIFI.

Step 302: the intelligent terminal obtains identity identification information and an identifier of a trigger signal and stores the identity identification information and the identifier of the trigger signal to a commodity recommendation command.

Wherein, when the keyword is actively set by the user, since the keywords set by various users are different, it is necessary to distinguish the commodity recommendation command sent by each washing machine according to the identity information. Hence, when the keyword is set, there is also a need to store the identity identification information of the user to the commodity recommendation command.

Wherein, the step of obtaining the identifier of the trigger signal specifically includes: after the washing machine is bound with the intelligent terminal, the intelligent terminal obtains a model of the washing machine and displays all triggering manners corresponding to washing machine of the model on a setting interface of the terminal. When the user selects one triggering manner, the intelligent terminal obtains the identifier of the trigger signal corresponding to the triggering manner.

For example, for the washing machine with the XX brand and the A-309S model, a physical key is arranged on the washing machine and the corresponding triggering manner includes: pressing once, continuously pressing twice and continuously pressing for three times. After the intelligent terminal is bound with the washing machine of the A-309S model, the intelligent terminal obtains the model "A-309S" and displays the triggering manner of "pressing once, continuously pressing twice and continuously pressing for three times" on the setting interface. When the user chooses pressing once on the setting interface, the intelligent terminal obtains an identifier of a trigger signal corresponding to the "pressing once".

Wherein, the identity identification information is a washing machine code or a user ID. Each washing machine is provided with a unique code when leaving the factory, for identifying different washing machine device. The user ID is an account number through which the user logs in the server. The account number is unique in the server and is used for identifying different users.

The step of obtaining the user ID specifically includes: the user ID that logs in the intelligent terminal is obtained directly and the user ID is synchronized to a control module of the washing machine, so that when receiving the trigger signal, the washing machine obtains the user ID, stores the user ID to the commodity recommendation command of the washing machine and sends the commodity recommendation command to the server.

For example, the user ID that logs in the intelligent terminal is a mobile phone number "136****1234", and the intelligent terminal directly obtains the user ID "136****1234" and synchronizes the user ID to the washing machine.

The step of obtaining the washing machine code specifically includes: the washing machine code is obtained from the washing machine, or the washing machine code is obtained when the condition that the user inputs the washing machine code at the intelligent terminal is detected.

For example, an ex-factory code of the washing machine is "20150910****1234". The intelligent terminal obtains the code "20150910****1234" from the washing machine or the user directly inputs the code "20150910****1234" at the setting interface of the intelligent terminal.

Specifically, after obtaining the identity identification information and the identifier of the trigger signal, the intelligent terminal stores the identity identification information and the identifier of the trigger signal to the commodity recommendation command, wherein the commodity recommendation command stored by the intelligent terminal is the same as the commodity recommendation command in the washing machine. Preferably, the commodity recommendation command stored by the intelligent terminal further can be synchronized to the washing machine.

For the commodity recommendation commands containing the identity identification information and the identifier of the trigger signal, the commodity recommendation commands sent by different washing machine devices or user IDs are different. Moreover, different triggering manners correspond to different trigger signals. The commodity recommendation commands sent by the same washing machine device or user ID are also different. Hence, each of the commodity recommendation commands is unique.

Step 303: the intelligent terminal sets the keyword corresponding to the commodity recommendation command, and stores the corresponding relationship therebetween to the server.

Specifically, after storing the identity identification information and the identifier of the trigger signal to the commodity recommendation command and when detecting that the user sets the keyword at the setting interface, the intelligent terminal stores information set by the user, establishes the corresponding relationship between the commodity recommendation command and the keyword and stores the corresponding relationship therebetween to the server.

Preferably, the default consignee information and payment manner further are set, so that the user can conveniently perform the one-key ordering when shopping on a commodity recommendation page and the commodity order can be generated quickly.

Wherein, the consignee information at least includes a consignee name, a consignee telephone number and a delivery address. Preferably, the consignee information further includes a postal code of the delivery address. The payment manner includes online payment or cash on delivery. Regarding the online payment, a selectable payment system (such as credit card payment, debit card payment, alipay payment or wechat payment), a priority payment sequence of the payment system (for example, the alipay payment is used first and if the alipay payment fails, the wechat payment is used), and a payment limit (for example, the one-off payment below RMB 200 Yuan can be made automatically and the monthly payment should not exceed RMB 500 Yuan, etc.) further can be preset.

In this embodiment, for an intelligent internet-of-things washing machine supporting installation of an APP, the APP further is directly installed on the washing machine. The user can register an account on the washing machine to bind the account with the washing machine, set a keyword corresponding to a commodity recommendation command on the washing machine and stores a corresponding relationship therebetween to the server.

After the completion of setting and storing the set contents, the user triggers the recommendation apparatus on the washing machine according to a set triggering manner in every shopping in future use. The washing machine executes the method in the embodiment I, the embodiment II or the embodiment III to recommend corresponding commodities to the user and the user directly clicks a link to purchase or directly places an order according to an actual demand. In this way, the shopping operation of the user is simplified, the shopping time of the user is saved, and the user experience is improved.

### Embodiment V

The embodiment provides a washing machine. As shown in Fig. 5, the washing machine is an internet-of-things washing machine. The washing machine is in communication connection with a server. The server is in communication connection with an intelligent terminal.

Wherein, a recommendation apparatus is arranged on the washing machine and is used for triggering the washing machine to send a commodity recommendation command to the server. The server searches for a keyword corresponding to the commodity recommendation command according to the commodity recommendation command, automatically recommends commodities relevant to the keyword by using big data, sends the commodities to the intelligent terminal and displays the commodities on the intelligent terminal. The user can directly click a link to purchase the commodities.

Specifically, the washing machine includes a communication module and a control module. The washing machine performs data interaction with the server via the communication module. The recommendation apparatus sends a corresponding trigger signal to the control module of the washing machine when being triggered. After reception of the trigger signal, the control module sends a corresponding commodity recommendation command to the server via the communication module, wherein the commodity recommendation command at least includes an identifier of the trigger signal. After reception of the commodity recommendation command, the server searches for a keyword corresponding to the commodity recommendation command, automatically recommends commodities relevant to the keyword by using big data and sends recommended commodities to the intelligent terminal bound to the washing machine for displaying.

Preferably, the recommendation apparatus is a touch panel arranged on the washing machine, and a manner for triggering the touch panel comprises: touching the touch panel according to a preset track

The preset track can be in any pattern. The preset track of each pattern is referred to as a triggering manner. Preset tracks of different patterns correspond to different triggering manners and each triggering manner corresponds to one trigger signal. Preferably, the preset track is preset in the washing machine by a developer. For example, the track preset in the washing machine is a letter pattern C, and the triggering manner is touching the touch panel according to a track letter C.

Further preferably, the recommendation apparatus is a physical key arranged on the washing machine. The key-press manner of the physical key is preset in the washing machine by the developer. Each key-press manner is referred to as a triggering manner and each triggering manner corresponds to one trigger signal. Preferably, a manner for triggering the physical key at least includes any one of a group consisted of pressing once, continuously pressing twice, continuously pressing for three times, long pressing once, shortly pressing once and then long pressing once, and shortly pressing twice and then long pressing once.

Preferably, the physical key is a newly added key except a power key, a start/pause key, a washing program key and washing parameter keys. The washing parameter keys are used for controlling various parameters in the washing program such as rinsing, dewatering, a water level, a time, a temperature, drying and a rotational speed.

For example, as shown in Fig. 6, a power key, a start/pause key, a washing program key, a rinsing key, a dewatering key, a water level key and a one-key recommendation key are arranged on the washing machine. The one-key recommendation key is the recommendation apparatus and is used for triggering the washing machine to send the commodity recommendation command to the server. The server screens commodities according to the commodity recommendation command and displays screened commodities on the intelligent terminal bound to the washing machine.

Preferably, the physical key is any one of the washing parameter keys. After a washing program is selected and if the physical key is triggered, the function of the corresponding washing parameter is executed. When the washing program is not selected and if the physical key is triggered, the function of triggering the washing machine to send the commodity recommendation command to the server is executed.

For example, as shown in Fig. 7, a power key, a start/pause key, a washing program key, a rinsing key, a dewatering key and a water level key are arranged on the washing machine, wherein the water level key further is used as the recommendation apparatus for triggering the washing machine to send the commodity recommendation command to the server. After startup of the washing machine, when the washing program is not selected and if the water level key is pressed, the water level key executes a shopping function at this moment. That is, a trigger signal corresponding to the water level key is sent to the washing machine and the washing machine is triggered to send the commodity recommendation command to the server. After the washing program is selected and if the water level key is pressed, the water level key executes a function of setting a water level of the washing machine.

Preferably, the recommendation apparatus is a combined key composed of any at least two keys on the washing machine, and a manner for triggering the combined key includes: pressing all keys composing the combined key simultaneously.

For example, as shown in Fig. 7, the recommendation apparatus is a combined key composed of a rinsing key, a dewatering key and a water level key. A manner for triggering the combined key includes: pressing the rinsing key, the dewatering key and the water level key simultaneously.

Regardless of whether the recommendation apparatus is the physical key, the touch panel or the combined key and whichever the triggering manner is, the user can obtain the commodities recommended by the server using the big data and most appropriate to the user in one step by using the washing machine. By virtue of such a shopping washing machine, not only is the shopping habit of the user improved, but the shopping time of the user is also saved; the shopping efficiency of the user is improved, the shopping experience of the user is greatly improved and the experience of the user to use the washing machine is also improved.

### Embodiment VI

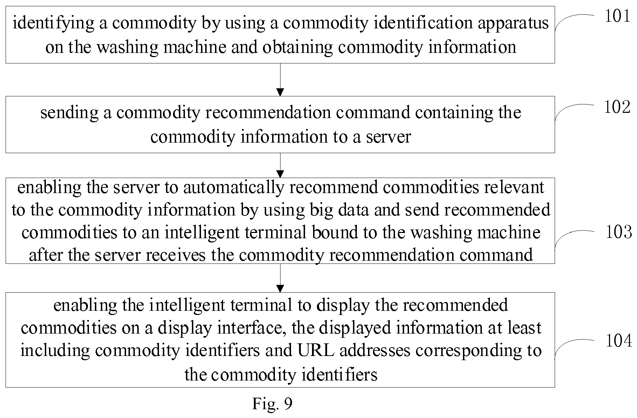

The embodiment provides a method for quickly recommending commodities by using a washing machine. As shown in Fig. 9, the method includes the following steps.

Step 101: a commodity is identified by a commodity identification apparatus on the washing machine and commodity information is obtained.

Step 102: a commodity recommendation command containing the commodity information is sent to a server.

Step 103: after reception of the commodity recommendation command, the server automatically recommends commodities relevant to the commodity information by using big data and sends recommended commodities to an intelligent terminal bound to the washing machine.

Step 104: the intelligent terminal displays the recommended commodities on a display interface, the displayed information at least including commodity identifiers and URL (Uniform Resource Locator) addresses corresponding to the commodity identifiers.

In this embodiment, the commodity is directly identified by the commodity identification apparatus on the washing machine and the server recommends the commodities appropriate to the user by using the big data and displays the commodities on the intelligent terminal bound to the washing machine. For the user, the recommended commodities most appropriate to the user is obtained only by scanning the commodity once or reading the information via a reader. In this way, the online shopping time of the user is saved, the shopping efficiency of the user is improved and the operation of the user is simplified.

### Embodiment VII

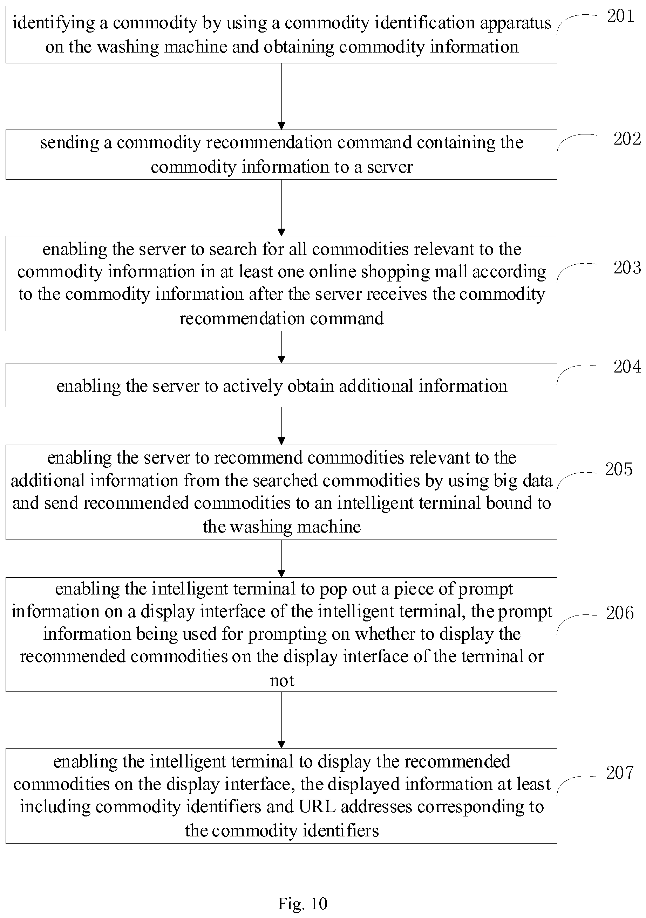

The embodiment provides a method for quickly recommending commodities by using a washing machine. The differences of this embodiment from the embodiment II lies in that, as shown in Fig. 10, the method includes the following steps.

Step 201: a commodity is identified by a commodity identification apparatus on the washing machine and commodity information is obtained.

Wherein, a commodity identification apparatus is arranged on the washing machine and is used for identifying the commodity and obtaining the commodity information. Preferably, the commodity identification apparatus is an RFID reader/writer. An RFID chip is arranged on the commodity. Relevant information of the commodity including a name, a brand, a manufacturer, a style/model and the like of the commodity is pre-stored in the chip.

Further preferably, the commodity identification apparatus is a scanner and can scan a two-dimensional code or barcode attached to the commodity. The two-dimensional code or barcode of the commodity contains information relevant to the commodity.

Wherein, the barcode is a graphic identifier on which multiple black bars and blanks having unequal widths are arranged according to a certain encoding rule to express a group of information, and can store a character and a figure. The conventional barcode is a parallel line pattern arranged by black bars (referred to as bars) and white bars (referred to as blanks) having very large reflectivity. Much information such as a manufacturing country, a manufacturer, a commodity name, a production date, a book classification number, a mail start/stop location, a category, a date and the like of an article can be marked on the barcode and thus is widely applied to book management, postal management, a bank system and particularly to commodity circulation. Therefore, by scanning the barcode on the commodity, relevant information of the commodity can be obtained.

For example, the scanned commodity is a commodity with the barcode "6920174700787". By searching in a barcode database, relevant information of the commodity is obtained, including that the category is a laundry product, the name is a laundry detergent, the brand is Liby, the specification is 500g and the model/style is cleaning rose.

Wherein, the two-dimensional code is a black and white chequered graph formed in a manner that certain special geometric figures are distributed on a plane (in a two-dimensional direction) according to a certain rule and used for recording data symbol information. A concept of "0" and "1" bit streams composing an internal logic basis of a computer in code compilation is utilized, character value information is expressed by using a plurality of geometric forms corresponding to a binary system, and the two-dimensional code is automatically read via an image input device or an optoelectronic scanning device to implement information automatic processing. The two-dimensional code has some common characteristics of barcode technologies: each code system has a special character set; each character has a certain width; and the two-dimensional code has a certain verification functions and the like, simultaneously further has an automatic identification function for information on different lines and processes a graph rotational transformation point. Besides the character and the finger, the stored information further can include a picture, a sound and other information. The two-dimensional code is used on a commodity for indicating a brand, a place of origin, a style, a model or even a composition and the like of the commodity. Therefore, through scanning the two-dimensional code on the commodity, the relevant information of the commodity can be obtained.

When the user washes the clothes and finds that the detergent is used up and needs to be purchased, in order to prevent forgetting, the barcode/two-dimensional code on an outer package of the detergent can be intermediately placed onto the scanner of the washing machine for scanning, so that the washing machine obtains relevant information of the detergent.

Step 202: a commodity recommendation command containing the commodity information is sent to a server.

Specifically, the washing machine sends the commodity recommendation command containing the commodity information to the server via a communication module.

Step 203: after reception of the commodity recommendation command, the server searches for all commodities relevant to the commodity information in at least one online shopping mall according to the commodity information.

Specifically, after the reception of the commodity recommendation command, the server analyzes contents relevant to the commodity in the commodity information, wherein the commodity information at least includes a name or a commodity identifier of the commodity. The server searches for all relevant commodities in at least one online shopping mall according to the contents in the commodity information.

Wherein, the online shopping mall for example is Ehaier, Taobao, Tmall, JDcom and the like. The searched commodities include: a commodity containing the same commodity information (such as a same type of Tide lavender gentle scent laundry detergent), a commodity similar to the commodity corresponding to the commodity information (such as a Liby lavender laundry detergent) and a commodity matched with the commodity corresponding to the commodity information (such as a Tide lavender gentle scent softener), etc. When the commodity scanned by the user is a piece of clothes, according to a material of the clothes, a detergent suitable for the material, an accessory matched with the clothes and the like further can be recommended.

Step 204: the server actively obtains additional information.

Step 205: the server recommends commodities relevant to the additional information from the searched commodities by using the big data and sends recommended commodities to an intelligent terminal bound to the washing machine.

Step 206: the intelligent terminal pops out a piece of prompt information on a display interface, the prompt information being used for prompting on whether to display the recommended commodities on the display interface of the terminal or not.

Step 207: the intelligent terminal displays the recommended commodities on the display interface, the displayed information at least including commodity identifiers and URL addresses corresponding to the commodity identifiers.

The technical solutions recorded in the step 204 to the step 207 are the same as the technical solutions in the embodiment II.

In this embodiment, the commodity is directly identified by the commodity identification apparatus on the washing machine, and the server recommends the commodities appropriate to the user by using the big data and displays the commodities on the intelligent terminal bound to the washing machine. For the user, the recommended commodities most appropriate to the user is obtained only by scanning the commodity once or reading the information via a reader. In this way, the online shopping time of the user is saved, the shopping efficiency of the user is improved and the operation of the user is simplified.

### Embodiment VIII

In the embodiment, on the basis of the embodiment VII, the user can purchase the commodities displayed on the display interface of the terminal according to a conventional purchase manner or perform one-key ordering on the commodities.

The differences of the embodiment from the embodiment III are as follows: in this embodiment, the commodity is directly identified by the commodity identification apparatus on the washing machine and the server recommends the commodities appropriate to the user by using the big data and displays the commodities on the intelligent terminal bound to the washing machine. The user can perform one-key ordering on one commodity on the intelligent terminal and also can perform quick ordering on mass commodities on the intelligent terminal. For the user, the recommended commodities most appropriate to the user is obtained only by scanning the commodity once or reading information once on the washing machine, and then the one-key ordering is performed on the recommended commodities to implement quick purchase of the commodities. In this way, the online shopping time of the user is saved, the shopping efficiency of the user is improved and the operation of the user is simplified.

### Embodiment IX

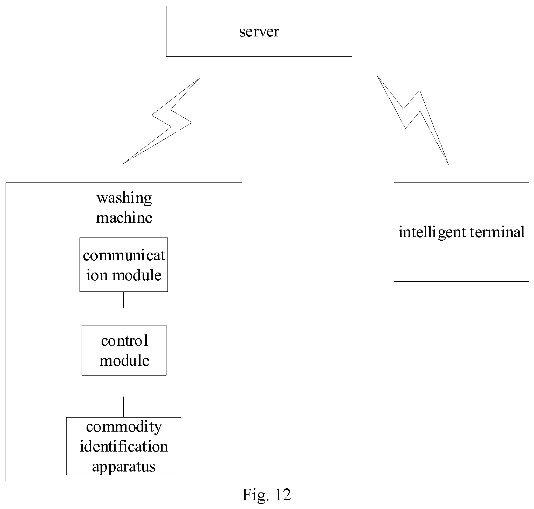

The embodiment provides a washing machine. The differences of the embodiment from the embodiment V are as follows: as shown in Fig. 12, the washing machine is in communication connection with a server; the server is in communication connection with an intelligent terminal; and the washing machine is provided with a commodity identification apparatus, a control module and a communication module.

The commodity identification apparatus is used for identifying a commodity, obtaining commodity information and sending the commodity information to the control module. Preferably, the commodity identification apparatus is an RFID reader/writer. An RFID chip is arranged on the commodity. Relevant information of the commodity including a name, a brand, a manufacturer, a style/model and the like of the commodity is pre-stored in the chip. Further preferably, the commodity identification apparatus is a scanner and can scan a two-dimensional code or barcode attached to the commodity. The two-dimensional code or barcode of the commodity contains information relevant to the commodity.

The control module is used for receiving the commodity information, storing the commodity information to a commodity recommendation command and sending the commodity recommendation command to the server via the communication module. The server automatically recommends commodities relevant to the commodity information by using big data, sends recommended commodities to the intelligent terminal bound to the washing machine and displays the recommended commodities on a display interface of the terminal.

The communication module connects the control module with the server, thereby implementing data interaction.

In this embodiment, a commodity identification apparatus is arranged on the washing machine. The barcode or the two-dimensional code attached to commodity can be directly identified by the user by using the commodity identification apparatus, thereby obtaining the information relevant to the commodity. Moreover, the server recommends the commodities most appropriate to the user to the intelligent terminal bound to the washing machine by using the big data, and thus the user can quickly purchase the commodities on the terminal.

The above descriptions are only preferred embodiments of the disclosure, and not for limiting the disclosure in any form. Although the disclosure has been disclosed by the preferred embodiments as above, they are not used to limit the disclosure. Those skilled in the art makes use of the technical contents disclosed above to make some changes or modify them into equivalent embodiments with equivalent changes without departing from the scope of technical solutions of the disclosure. Any of simple variations, equivalent changes and modifications made to the above embodiments in accordance with the technical nature of the disclosure without departing from contents of technical solutions of the disclosure belongs to the scope of technical solutions of the disclosure.

## Claims

1. A method for quickly recommending commodities by using a washing machine comprising:
S11: enabling the washing machine to receive a trigger signal;
S12: sending a commodity recommendation command to a server, the commodity recommendation command at least comprising an identifier of the trigger signal;
S13: enabling the server to search for a keyword corresponding to the commodity recommendation command, automatically recommend commodity information relevant to the keyword by using big data and send recommended commodities to an intelligent terminal bound to the washing machine, after the server receives the commodity recommendation command; and
S14, enabling the intelligent terminal to display recommended commodities on a display interface of the intelligent terminal, wherein a displayed information at least comprises a commodity identifier and URL address corresponding to the commodity identifier.

2. The method for quickly recommending the commodities by using the washing machine according to claim 1, wherein the step of enabling the server to automatically recommend the commodities relevant to the keyword by using big data comprises:
A11: enabling the server to search for commodities relevant to the keyword in at least one online shopping mall according to the keyword;
A12: enabling the server to actively obtain additional information, the additional information comprising at least one of a group consisting of a historical purchase record of a user, a commodity browse record of the user, position information of the washing machine, a current season and current weather; and
A13: enabling the server to recommend commodities relevant to the additional information from searched commodities by using the big data.

3. The method for quickly recommending the commodities by using the washing machine according to claim 1, further comprising:
before the step S14, popping out a piece of prompt information on the display interface of the intelligent terminal, the prompt information being used for prompting whether to display the recommended commodities on the display interface of the terminal or not, and if yes, executing the step S14.

4. The method for quickly recommending the commodities by using the washing machine according to claim 3, wherein the intelligent terminal further displays an option of at least one sorting criterion on the display interface in the step S14, for sorting the recommended commodities according to the sorting criterion; and
the sorting criterion comprises at least one of a group consisting of sorting according to prices, sorting according to comments, sorting according to popularities, and sorting according to access amounts to the online shopping mall.

5. The method for quickly recommending the commodities by using the washing machine according to claim 1, wherein the commodity recommendation command further comprises identity identification information; and the identity identification information comprises a washing machine code and/or a user ID.

6. The method for quickly recommending the commodities by using the washing machine according to claim 5, further comprising,
before the step S11, setting a corresponding relationship between the commodity recommendation command and the keyword;
wherein, the setting method comprises:
B11: binding the washing machine on the intelligent terminal;
B12: enabling the intelligent terminal to obtain the identity identification information and the identifier of the trigger signal, and store the identity identification information and the identifier of the trigger signal into the commodity recommendation command; and
B13: enabling the intelligent terminal to set the keyword corresponding to the commodity recommendation command and store the corresponding relationship therebetween to the server.

7. The method for quickly recommending the commodities by using the washing machine according to any one of claims 1-6, wherein a recommendation apparatus is arranged on the washing machine, and when the recommendation apparatus is triggered, the trigger signal is sent to the washing machine.

8. The method for quickly recommending the commodities by using the washing machine according to claim 7, wherein the recommendation apparatus is a touch panel, and when the touch panel is activated according to a preset track, the trigger signal corresponding to the preset track is sent to the washing machine and the step S11 is executed; or
the recommendation apparatus is a physical key, and when the physical key is pressed according to a preset key-press manner, the trigger signal corresponding to the preset key-press manner is sent to the washing machine and the step S11 is executed; or
the recommendation device is combined keys composed of at least two keys existed on the washing machine, and when the combined keys are pressed, the trigger signal corresponding to the combined keys is sent to the washing machine and the step S11 is executed.

9. The washing machine adopting the method according to any one of claims 1-8, wherein the recommendation apparatus is arranged on the washing machine and is used for triggering the washing machine to send the commodity recommendation command to the server;
the server sends recommended commodities to the intelligent terminal bound to the washing machine according to the commodity recommendation command; and the intelligent terminal displays the recommended commodities on the display interface of the intelligent terminal.

10. The washing machine according to claim 9, wherein the recommendation apparatus is a touch panel arranged on the washing machine, and a manner for triggering the touch panel comprises: touching the touch panel according to a preset track; or
the recommendation apparatus is a physical key arranged on the washing machine, and a manner for triggering the physical key at least comprises any one of a group consisting of pressing once, continuously pressing twice, continuously pressing for three times, long pressing once, shortly pressing once and then long pressing once, and shortly pressing twice and then long pressing once; or
the recommendation apparatus is combined keys composed of at least two keys existed on the washing machine, and a manner for triggering the combined keys comprises: pressing all the keys composing the combined keys simultaneously.

11. A method for quickly recommending commodities by using a washing machine comprising:
S21: identifying a commodity by using a commodity identification apparatus on the washing machine and obtaining commodity information;
S22: sending a commodity recommendation command containing the commodity information to a server;
S23: enabling the server to automatically recommend commodities relevant to the commodity information by using big data and send recommended commodities to an intelligent terminal bound to the washing machine, after the server receives the commodity recommendation command; and
S24: enabling the intelligent terminal to display the recommended commodities on a display interface of the intelligent terminal, displayed information at least comprising a commodity identifier and URL address corresponding to the commodity identifier.

12. The method for quickly recommending the commodities by using the washing machine according to claim 11, wherein the step of enabling the server to automatically recommend commodities relevant to the commodity information by using big data comprises:
A21: enabling the server to search for all commodities relevant to the commodity information in at least one online shopping mall according to the commodity information;
A22: enabling the server to actively obtain additional information, the additional information comprising at least one of a group consisting of a historical purchase record of a user, a commodity browse record of the user, position information of the washing machine, a current season and current weather; and
A23: enabling the server to recommend commodities relevant to the additional information from searched commodities by using the big data.

13. The method for quickly recommending the commodities by using the washing machine according to claim 11, further comprising:
before the step S24, popping out a piece of prompt information on the display interface of the intelligent terminal, the prompt information being used for prompting whether to display the recommended commodities on the display interface of the terminal or not, and if yes, executing the step S24.

14. The method for quickly recommending the commodities by using the washing machine according to claim 11, wherein the intelligent terminal further displays an option of at least one sorting criterion on the display interface in the step S24, for sorting the recommended commodities according to the sorting criterion; and
the sorting criterion comprises at least one of a group consisting of sorting according to prices, sorting according to comments, sorting according to popularities, and sorting according to access amounts to the online shopping mall.

15. The method for quickly recommending the commodities by using the washing machine according to claim 11, wherein an ordering option corresponding to the commodity identifier is further arranged on the display interface of the intelligent terminal and is used for triggering the server to automatically generate a commodity order for a commodity corresponding to the commodity identifier.

16. The method for quickly recommending the commodities by using the washing machine according to claim 15, further comprising:
after the step S24, sending an ordering command to the server when detecting that a user clicks the ordering option, and enabling the server to automatically generate the commodity order.

17. The method for quickly recommending the commodities by using the washing machine according to claim 16, wherein the step of enabling the server to automatically generate the commodity order comprises:
B21: obtaining a commodity attribute according to the URL address corresponding to the commodity identifier; and
B22: searching for preset consignee information and a payment manner, and automatically generating the commodity order.

18. The method for quickly recommending the commodities by using the washing machine according to claim 17, further comprising:
after detecting that the user clicks the ordering option, popping out a prompt whether to confirm ordering or not on the display interface of the intelligent terminal, and if yes, sending the ordering command to the server and enabling the server to automatically generate the commodity order.

19. The method for quickly recommending the commodities by using the washing machine according to any one of claims 11-18, wherein the commodity identification apparatus is a scanner, and in the step S21, the scanner on the washing machine is used to scan a two-dimensional code or a barcode on the commodity and to obtain the commodity information; and
preferably, the commodity identification apparatus is an RFID reader/writer, and in the step S21, the RFID reader/writer is used to read an RFID chip on the commodity and to obtain the commodity information.

20. The washing machine adopting the method according to any one of claims 11-19, wherein the washing machine comprises:
the commodity identification apparatus, used for identifying a commodity, obtaining commodity information and sending the commodity information to a control module;
the control module, used for receiving the commodity information and storing the commodity information to a commodity recommendation command, and sending the commodity recommendation command to a server via a communication module, wherein the server automatically recommends commodities relevant to the commodity information by using big data, sends recommended commodities to the intelligent terminal bound to the washing machine and displays the recommended commodities on the display interface of the intelligent terminal; and
the communication module, used for connecting the control module with the server, thereby implementing data interaction.
